(19) Europäisches Patentamt
European Patent Office
Office européen des brevets

(11) **EP 0 916 873 B1**

(12) **EUROPÄISCHE PATENTSCHRIFT**

(45) Veröffentlichungstag und Bekanntmachung des Hinweises auf die Patenterteilung:
**26.09.2001 Patentblatt 2001/39**

(51) Int Cl.$^7$: **F16H 37/08**, F16H 15/52

(21) Anmeldenummer: **99102705.3**

(22) Anmeldetag: **23.10.1996**

(54) **Kraftfahrzeuggetriebe mit stufenlos veränderbarem Übersetzungsverhältnis**

Motor vehicle gearbox with infinitely variable reduction ratio

Boîte de vitesse d'automobile à rapport de démultiplication variable de manière progressive

(84) Benannte Vertragsstaaten:
**DE FR GB IT SE**

(30) Priorität: **26.10.1995 DE 19539776**

(43) Veröffentlichungstag der Anmeldung:
**19.05.1999 Patentblatt 1999/20**

(62) Dokumentnummer(n) der früheren Anmeldung(en) nach Art. 76 EPÜ:
**96934797.0 / 0 857 267**

(73) Patentinhaber: **Getrag Innovations GMBH**
**71636 Ludwigsburg (DE)**

(72) Erfinder: **Wedeniwski, Horst, Josef, Dr.**
**73630 Remshalden (DE)**

(74) Vertreter: **Witte, Alexander, Dr.-Ing.**
**Witte, Weller, Gahlert, Otten & Steil,**
**Patentanwälte,**
**Rotebühlstrasse 121**
**70178 Stuttgart (DE)**

(56) Entgegenhaltungen:
**EP-B- 0 149 892          WO-A-96/30672**
**US-A- 2 178 859          US-A- 2 836 994**
**US-A- 3 969 957**

• **PATENT ABSTRACTS OF JAPAN vol. 008, no. 083 (M-290), 17. April 1984 & JP 59 001862 A (KOMATSU SEISAKUSHO KK), 7. Januar 1984**

**Beschreibung**

Die Erfindung betrifft ein Kraftfahrzeuggetriebe mit stufenlos veränderbarem Übersetzungsverhältnis, mit einer Getriebeeingangswelle, einer Getriebeausgangswelle, einer ersten, einen Teil eines Hauptgetriebes bildenden Getriebestufe mit kontinuierlich einstellbarem Übersetzungsverhältnis und einer als Summiergetriebe ausgebildeten zweiten Getriebestufe, wobei die mit einer Antriebsdrehzahl umlaufende Getriebeeingangswelle einerseits mit dem Eingang der ersten Getriebestufe und andererseits über eine erste Kupplung mit einem ersten Eingang der zweiten Getriebestufe verbunden ist, wobei ferner der Ausgang der ersten Getriebestufe einerseits mit einem zweiten Eingang der zweiten Getriebestufe und andererseits über eine zweite Kupplung mit der Getriebeausgangswelle verbunden ist, die zugleich den Ausgang der zweiten Getriebestufe bildet, wobei die erste Getriebestufe als Reibkörpergetriebe, insbesondere als Reibrad-Umlaufgetriebe ausgebildet ist, bei dem zwei Reibkörper in einem Bereich reibschlüssig aneinanderliegen, von denen mindestens einer eine Reibkörperwelle umfaßt, die mit vorbestimmter Drehzahl umläuft.

Die Erfindung betrifft insbesondere solche Getriebe, bei denen durch Schalten zweier Kupplungen zwei Betriebsarten verwirklicht werden, die durch einen synchronen Übergang gekennzeichnet sind.

Ein Getriebe der vorstehend genannten Art ist aus dem Tagungsbericht "4. Aachener Kolloquium, Fahrzeug- und Motorentechnik '93", Seiten 607-622 bekannt. Das fragliche Getriebe ist in der Fachwelt auch unter der Herstellerbezeichnung "TOROTRAK" bekannt geworden.

Beim "TOROTRAK"-Getriebe sind auf einer Eingangswelle drehfest zwei Toroid-Reibkörper (sog. Globoide) angeordnet. Zwischen diesen beiden Toroid-Reibkörpern ist drehbar eine Zahnscheibe einer Zahnkette angeordnet, die an ihren beiden radialen Außenseiten ebenfalls als Toroid-Reibkörper ausgebildet ist. Zwischen den einander gegenüberliegenden Toroid-Reibflächen der festen und der drehbaren Toroid-Reibkörper befinden sich im Abstand von der Achse Reib-Übertragungskörper, die an jeweils beiden Reiboberflächen der Toroid-Reibkörper anliegen. Durch Verkippen dieser Reib-Übertragungskörper relativ zur Achsrichtung kann nun der Berührungspunkt auf den jeweiligen Toroid-Reibkörpern in radialer Richtung verstellt werden, so daß sich ein kontinuierlich einstellbares Übersetzungsverhältnis ergibt. Die Zahnscheibe dreht sich daher mit einer Drehzahl, die kontinuierlich gegenüber der Drehzahl der Eingangswelle verstellbar ist. Das Übersetzungsverhältnis kann dabei zwischen 2,0 und 0,5 verändert werden, was einer Spreizung von 4 entspricht. Das Getriebe kann dabei bereichsweise (i < 1) so betrieben werden, daß in schnellere Drehzahlen übersetzt wird. Kleinere Übersetzungsverhältnisse als 0,5 sind bauartbedingt nicht realisierbar, weil dann die Reib-Übertragungskörper zu steil zur Achsrichtung angestellt werden müßten.

Parallel zur Eingangswelle ist eine Ausgangswelle angeordnet. Die Ausgangswelle trägt axial nebeneinander zwei Hohlwellenabschnitte, von denen ein erster die zweite Riemenscheibe des Kettenantriebes sowie ein Sonnenrad eines Planetensatzes trägt. Der andere Hohlwellenabschnitt ist mit dem Steg des Planetensatzes verbunden, während das Hohlrad mit der Ausgangswelle verbunden ist, die sich durch die beiden Hohlwellenabschnitte hindurch erstreckt.

Der erste Hohlwellenabschnitt ist über eine erste Kupplung mit der Ausgangswelle verbindbar, während der zweite Hohlwellenabschnitt über eine zweite Kupplung mit einem Zahnrad verbunden ist, das über eine feste Übersetzung mit einem zugeordneten Festrad auf der Getriebeeingangswelle kämmt.

In einer ersten Betriebsart ist die erste Kupplung geschlossen und die zweite Kupplung geöffnet. Demzufolge treibt der Variator das Sonnenrad und die Eingangswelle über die Festübersetzung den Steg des Planetensatzes an, der in diesem Falle als Summiergetriebe wirkt. Der Ausgang des Planetensatzes, nämlich das Hohlrad, treibt die Ausgangswelle an.

In einer zweiten Betriebsart ist die erste Kupplung geöffnet und die zweite Kupplung geschlossen, so daß der erste Hohlwellenabschnitt drehstarr mit der Ausgangswelle verbunden ist. Demzufolge treibt der Variator unmittelbar die Ausgangswelle an.

Auf diese Weise lassen sich in der ersten Betriebsart niedrige Ausgangsdrehzahlen mit hohem Drehmoment erreichen. Das hohe Drehmoment wird im wesentlichen über den fest verzahnten Zweig des Kraftflusses über die zweite Kupplung übertragen. In der zweiten Betriebsart sind hingegen hohe Ausgangsdrehzahlen möglich, wobei das niedrigere Drehmoment (bei gleicher Leistung) über die hohen Drehzahlen des Variators unmittelbar auf die Ausgangswelle geleitet wird.

Das "TOROTRAK"-Getriebe ist im Aufbau relativ kompliziert. Dies betrifft insbesondere die Gestaltung der Toroid-Reibkörper sowie der Reib-Übertragungskörper, deren Steuerung zueinander und die Sicherstellung des Reibschlusses zwischen den genannten Elementen über den gesamten Übersetzungsbereich hinweg.

Weiterhin benötigt das zuvor beschriebene "TOROTRAK"-Getriebe zwei parallele Wellen mit übergreifendem Kettenantrieb, wodurch eine erhebliche Abmessung des Getriebes entsteht, die in zahlreichen Anwendungsfällen für PKW-Getriebe nicht tragbar ist.

In der EP-B1-0 560 840 ist eine Abwandlung des vorstehend beschriebenen "TOROTRAK"-Getriebes beschrieben. Dieses bekannte Getriebe ist aufgrund seiner langen axialen Bauweise für den Längseinbau in Kraftfahrzeuge, jedoch nicht für den Front-Quer-Einbau geeignet.

Aus der EP-B1-0 149 892 ist ein Kraftfahrzeuggetriebe mit stufenlos veränderbarem Übersetzungsverhältnis bekannt, das eine weitere Abwandlung des vorstehend erläuterten "TOROTRAK"-Getriebes darstellt.

Dieses bekannte Getriebe weist einen Variator auf, der in seiner Bauart identisch mit dem zuvor beschriebenen Variator mit Globoiden ist. Die Abwandlung besteht darin, daß das Getriebe von koaxialer Bauart ist, wobei sich in axialer Verlängerung der Eingangswelle des Variators die als Hohlwelle ausgebildete Ausgangswelle des Variators befindet und diese beiden Wellen jeweils mit der Sonne zweier als Summierungsstufe wirkender Planetensätze verbunden sind. Die beiden Planetensätze sind axial hintereinander angeordnet. Bei dem von der hohlen Ausgangswelle des Variators angetriebenen Planetensatz, der nur in der Langsambetriebsart im Leistungsfluß ist, kann der Steg mittels einer Bremse am Gehäuse des Getriebes raumfest gehalten werden. Bei dem von der verlängerten Eingangswelle des Variators angetriebenen weiteren Planetensatz kann hingegen der Steg über eine schaltbare Kupplung mit der hohlen Ausgangswelle des Variators verbunden werden, wobei der Steg zugleich die Ausgangswelle des Gesamtgetriebes antreibt.

In der Schnellbetriebsart liegt nur der Variator im Leistungsfluß, die beiden anderen Planetensätze sind funktionell entkoppelt. Für dieses Getriebe sind somit zwei Planetensätze der beschriebenen Bauart für die Funktion der als Summiergetriebe für die Langsambetriebsart ausgebildeten Getriebestufe erforderlich.

Aus der JP-A-59 001 862 ist ein mechanisches, stufenloses Getriebe bekannt, das nach Art eines sogenannten Graham-Getriebes ausgebildet ist. Von der Eingangswelle des Getriebes wird ein Träger angetrieben, in dem zwei Reibkegel gelagert sind. Die Reibkegel-Wellen sind an ihrem freien Ende jeweils mit einem Ritzel versehen, die ihrerseits ein Hohlrad eines Planetensatzes antreiben. Das Sonnenrad des Planetensatzes wird direkt von der Antriebswelle angetrieben. Die Ausgangswelle des Getriebes ist mit dem Steg des Planetensatzes verbunden.

Dieses bekannte Getriebe ist somit ein reines stufenloses Getriebe ohne die Möglichkeit der Umschaltung von Fahrbereichen mit einer Betriebsart "Lastbetrieb" einerseits und einer Betriebsart "Direktbetrieb" andererseits.

Aus der US-A-2 353 136 ist ein weiteres Kraftfahrzeuggetriebe in Graham-Bauart bekannt.

Bei diesem bekannten Getriebe ist die Eingangswelle über eine Planeten-Umkehrstufe wiederum mit einem Träger für zwei rotierende Reibkegel verbunden und andererseits durch die Reibkegel-Anordnung hindurchgeführt. Der Ausgang der Reibkegel-Anordnung ist als Hohlwelle koaxial zur durchgeführten Eingangswelle angeordnet. Mit diesen beiden Wellen wird wiederum ein Summiergetriebe angesteuert, das aus zwei hintereinandergeschalteten Planetensätzen besteht. Im ersten Planetensatz wird die Ausgangsdrehzahl des Variators übersetzt, und diese übersetzte Drehzahl wird dann im zweiten Planetensatz mit der Eingangsdrehzahl summiert. Die Summendrehzahl ist dann die Drehzahl der Ausgangswelle.

Auch für dieses Getriebe gilt, daß es ein Einbereichs-Variatorgetriebe ohne die Möglichkeit der Umschaltung zwischen zwei Betriebsbereichen ist.

Ein weiteres Getriebe mit schräg angeordneten Reibkörpern ist noch aus der JP-A-03 249 459 bekannt.

Schließlich offenbart die WO 96/30672, veröffentlicht am 3. 10. 1996, noch ein stufenloses Getriebe, bei dem ebenfalls rotierende Reibkegel verwendet werden. Bei diesem bekannten Getriebe ist die Eingangswelle über einen Radsatz mit den umlaufenden Reibkegeln verbunden. Das auf der Eingangswelle befindliche Zahnrad hat einen größeren Durchmesser als die an den Reibkegeln befindlichen Zahnräder, so daß die Reibkegel sich mit einer höheren Drehzahl, verglichen mit der Eingangswelle, drehen. Damit wird die Eingangsdrehzahl zu den Reibkegeln ins Schnelle übersetzt, wobei das Übersetzungsverhältnis konstant ist.

Der Erfindung liegt demgegenüber die Aufgabe zugrunde, ein Getriebe der eingangs genannten Art dahingehend weiterzubilden, daß erstmalig für den Einsatz in PKWs ein Getriebe mit stufenlos veränderbarem Übersetzungsverhältnis zur Verfügung gestellt wird, das einerseits nur sehr geringe bauliche Abmessungen hat und andererseits in der Lage ist, auch größere Leistungen zu übertragen, wie dies im modernen Kraftfahrzeugbau erforderlich ist.

Diese Aufgabe wird bei einem Kraftfahrzeuggetriebe der eingangs genannten Art erfindungsgemäß dadurch gelöst, daß das Übersetzungsverhältnis zwischen Getriebeeingangswelle und Reibkörperwelle derart bemessen ist, daß der mindestens eine umlaufende Reibkörper über den gesamten Übersetzungsbereich mit höherer Drehzahl als die Antriebsdrehzahl umläuft, wobei die Eingangswelle mit einem eine Lagerung für die Reibkörperwelle aufweisenden Flansch in Verbindung steht, derart, daß die höhere Drehzahl proportional vom jeweiligen Übersetzungsverhältnis des Reibkörpergetriebes abhängt.

Die erste Getriebestufe ist als Reibrad-Umlaufgetriebe Teil eines Hauptgetriebes. Dessen erste Anschlußwelle ist mit der Getriebeeingangswelle verbunden. Dessen zweite Anschlußwelle (konstanter Ausgang) weist eine von dem Übersetzungsverhältnis der ersten Getriebestufe unabhängige Drehzahl auf. Die dritte Anschlußwelle (variabler Ausgang) weist hingegen eine von diesem Übersetzungsverhältnis abhängige Drehzahl auf. Das Hauptgetriebe, die erste Getriebestufe, die zweite Getriebestufe und auch das Gesamtgetriebe sind bevorzugt koaxial zueinander angeordnet.

Alternativ dazu kann aber insbesondere für einen Front-Quer-Einbau das Hauptgetriebe und die zweite Getriebestufe zwar jeweils in sich koaxial, jedoch auf zwei zueinander parallelen Hauptachsen angeordnet sein.

Das Hauptgetriebe kann dabei - wie noch ausgeführt werden wird - zum Erzielen verschiedener Effekte durch weitere Planetengetriebestufen ergänzt werden. Die zweite Getriebestufe besteht lediglich aus einem Planetensatz. Alle Getriebestufen des Hauptgetriebes befinden sich immer im Leistungsfluß.

Die erste Getriebestufe ist, wie erwähnt, vorzugsweise als Reibrad-Umlaufgetriebe ausgeführt, das nach dem Friktionsprinzip "Kegel auf Ring unter hypozyklischer Bewegung" funktionieren kann. Dabei bilden ein Kegel und ein Ring ohne Zwischenelement einen Wälzkontakt. Die Reibkörper laufen folglich über den gesamten Übersetzungsbereich mit höheren Drehzahlen als die Antriebsdrehzahl um.

Die der Erfindung zugrunde liegende Aufgabe wird auf diese Weise vollkommen gelöst.

Durch die Maßnahme, daß die Reibkörper über den gesamten Übersetzungsbereich mit höheren Drehzahlen umlaufen, wird erreicht, daß bei gleicher übertragener Leistung das übertragene Drehmoment stets kleiner wird, so daß insgesamt höhere Leistungen übertragbar sind, da das Drehmoment die begrenzende Größe bei der Reibübertragung ist. Die Erfindung setzt insoweit einen Kunstgriff ein, indem an der Stelle des Getriebes, an der die Leistungsübertragung über Reibschluß stattfindet, die Drehzahl in jedem Arbeitspunkt erhöht wird. Da die Leistungsübertragung bei Reibberührung durch die Schubkräfte im Berührungsbereich begrenzt ist, kann daher bei demselben Drehmoment eine höhere Leistung übertragen werden, wenn isoliert im Getriebe gerade dieser Reibberührungsbereich in der Drehzahl angehoben wird.

Es ist zu berücksichtigen, daß alle herkömmlichen Reibradgetriebe zumindest bereichsweise "ins Langsame" übersetzen, d.h. Übersetzungsverhältnisse über 1,0 aufweisen. Demgegenüber wird erfindungsgemäß ein Übersetzungsverhältnis eingesetzt, das deutlich unter 1,0 liegt, nämlich vorzugsweise in einem Bereich zwischen 0,2 und 0,4. Der Übersetzungsbereich fängt daher beim erfindungsgemäßen Getriebe dort erst an, wo er beim "TOROTRAK"-Getriebe aufhört.

Bei einer bevorzugten Weiterbildung der Erfindung ist dem Reibkörpergetriebe im Hauptgetriebe eine in langsamere Drehzahlen übersetzende und als Reduzierungssatz wirkende, dritte Getriebestufe vorgeschaltet, die eine Eingangsdrehzahl des Getriebes in eine langsamere Zwischendrehzahl übersetzt.

Diese Maßnahme hat den Vorteil, die Drehzahlen insgesamt in einem technisch vernünftigen Rahmen halten zu können, wenn aus den weiter oben erläuterten Gründen zur Erhöhung der übertragbaren Leistung die unter Reibschluß aneinanderliegenden Getriebeelemente in der Drehzahl angehoben werden. Wenn die Drehzahl zuvor abgesenkt wurde, kann auf diese Weise ein leicht handhabbarer Drehzahlbereich eingesetzt werden.

Bei den verwendeten Reibkegeln ist besonders bevorzugt, wenn der halbe Öffnungswinkel zwischen 10° und 20°, vorzugsweise bei 17°, liegt.

Diese Dimensionierung hat den Vorteil, daß sich ein besonders günstiges Bohr-Wälz-Verhältnis ergibt (vergleiche DE-Buch "Niemann, Maschinenelemente, Band III", Springer-Verlag, Seiten 192-193, 1986).

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1  Eine schematische Darstellung eines ersten Ausführungsbeispiels eines erfindungsgemäßen Getriebes;

Fig. 2  eine Darstellung, ähnlich Fig. 1, jedoch für eine erste leichte Abwandlung des dort gezeigten Ausführungsbeispiels;

Fig. 3  eine Darstellung, ähnlich Fig. 1, jedoch für eine zweite leichte Abwandlung des dort gezeigten Ausführungsbeispiels;

Fig. 4  eine weitere Darstellung, ähnlich Fig. 1, jedoch für eine dritte Abwandlung des dort gezeigten Ausführungsbeispiels;

Fig. 5  eine weitere Darstellung, ähnlich Fig. 1, jedoch für eine vierte Abwandlung des dort gezeigten Ausführungsbeispiels.

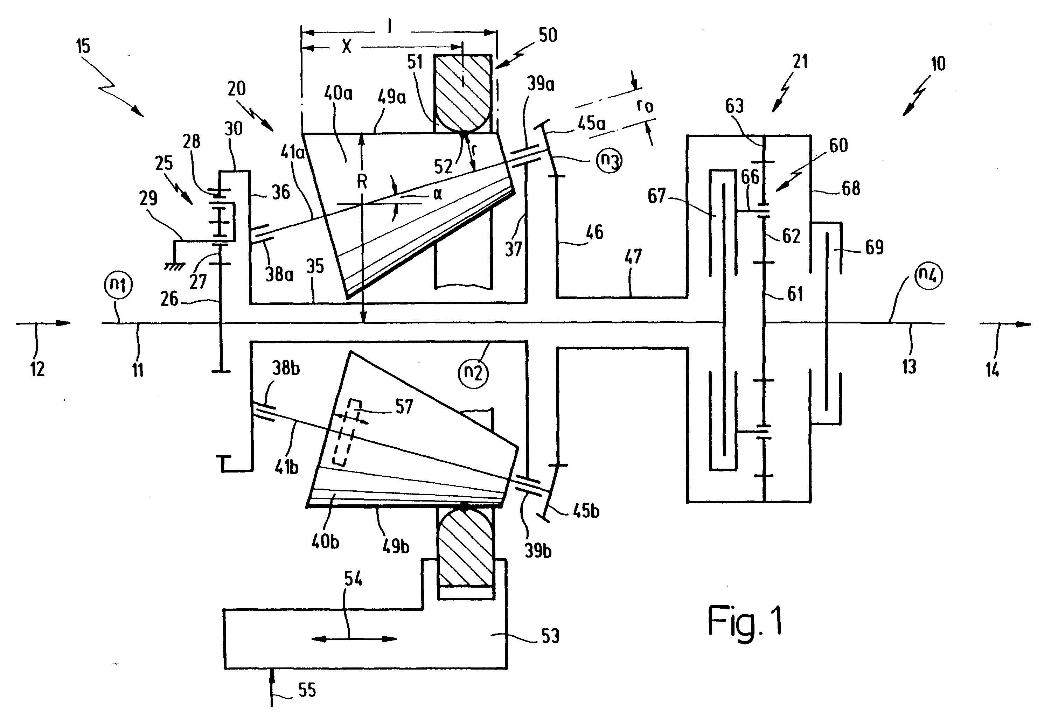

In Fig. 1 bezeichnet 10 insgesamt ein Kraftfahrzeuggetriebe mit stufenlos einstellbarem Übersetzungsverhältnis. Das Getriebe 10 gehört getriebetechnisch gesprochen zur Gruppe der sogenannten Stellkoppelgetriebe.

Das Getriebe 10 umfaßt eine Eingangswelle 11, über die eine Eingangsleistung zugeführt werden kann, wie mit einem Pfeil 12 angedeutet. Die Drehzahl der Eingangswelle 11 ist mit $n_1$ bezeichnet. Am Getriebeausgang ist eine Ausgangswelle 13 zu erkennen, an der die Ausgangsleistung abgenommen werden kann, wie mit einem Pfeil 14 angedeutet. Die Drehzahl der Ausgangswelle 13 ist mit $n_4$ bezeichnet.

Das Getriebe 10 umfaßt ein Hauptgetriebe 15. Das Hauptgetriebe 15 weist seinerseits eine erste Getriebestufe 20 mit kontinuierlich einstellbarem Übersetzungsverhältnis auf. Das Getriebe 10 zerfällt somit insgesamt im wesentlichen in das Hauptgetriebe 15 sowie in eine zweite Getriebestufe 21, die als Summmiergetriebe ausgebildet ist. Bei dem in Fig. 1 dargestellten Ausführungsbeispiel ist das Hauptgetriebe 15 in einer Grundkonfiguration ausgebildet.

In der ersten Getriebestufe 20 ist die Eingangswelle 11 zunächst mit einer Untersetzungsstufe 25 versehen. Die Untersetzungsstufe 25 ist als Doppel-Planetensatz ausgestaltet. Ein Sonnenrad 26 sitzt drehfest auf der Eingangswelle 11. Das Sonnenrad 26 kämmt mit einem ersten Planetenrad 27 und dieses wiederum mit einem zweiten Planetenrad 28, wobei die Planetenräder 27, 28 auf einem gemeinsamen, raumfesten Steg 29 angeordnet sind. Das zweite Planetenrad 28 kämmt mit einem Hohlrad 30.

Das Hohlrad 30 ist drehstarr mit einer ersten Hohlwelle 35 verbunden, die die Eingangswelle 11 koaxial umgibt. Hierzu ist die erste Hohlwelle 35 mit einem radialen ersten Flansch 36 versehen.

Im axialen Abstand vom ersten Flansch 36 ist die Hohlwelle 35 mit einem radialen zweiten Flansch 37 versehen. Die Flansche 36, 37 tragen mehrere über ihren Umfang verteilte schräge Lager. An einer radial einwärtigen Position des ersten Flansches 36 befinden sich erste schräge Lager 38a, 38b, und an einer radial auswärtigen Position des zweiten Flansches 37 befinden sich zweite schräge Lager 39a, 39b. Bevorzugt sind jeweils drei derartige Lager 38, 39 äquidistant über den Umfang der Flansche 36, 37 verteilt.

In den Lagern 38a, 38b, 39a, 39b laufen Wellen 41a, 41b, auf denen wiederum Reibkegel 40a, 40b sitzen. Die Reibkegel 40a, 40b laufen damit insgesamt drehstarr mit der ersten Hohlwelle 35 um. Die Reibkegel 40a, 40b sind jedoch in den Lagern 38a, 38b, 39a, 39b lose drehbar gelagert.

Das rechte freie Ende der Wellen 41a, 41b ist drehfest mit einem Kegelrad 45a, 45b versehen. Die Kegelräder 45a, 45b kämmen mit einem gemeinsamen Kegelrad 46, das auf einer zweiten Hohlwelle 47 sitzt. Die zweite Hohlwelle 47 verläuft ebenfalls koaxial zur Eingangswelle 11 und ist axial dicht neben der ersten Hohlwelle 35 angeordnet.

Wie man aus Fig. 1 deutlich erkennen kann, sind die Lager 38a, 38b, 39a, 39b an den Flanschen 36, 37 so angeordnet, daß die Wellen 41a, 41b mit der Achsrichtung der Eingangswelle 11 bzw. der Hohlwellen 35, 47 einen spitzen Winkel $\alpha$ bilden. Da der Winkel $\alpha$ genau gleich dem halben Öffnungswinkel der Reibkegel 40a, 40b ist, verläuft die äußere Mantellinie 49a, 49b der Reibkegel 40a, 40b gerade parallel zur Achsrichtung der Wellen 11, 35, 47.

Ein Reibring 50 umschließt die Reibkegel 40a, 40b. Der Reibring 50 ist auf seiner Innenseite mit einer Wälzoberfläche 51 versehen. Die Wälzoberfläche 51 ist vorzugsweise als ringförmige Schneide aus Stahl ausgebildet und liegt in einem Berührungspunkt 52 an jedem der ebenfalls vorzugsweise in Stahl ausgeführten Reibkegel 40a, 40b an, und zwar über einen Ölfilm, so daß eine sogenannte elasto-hydrodynamische Schmierung (EHS) entsteht. Das Öl wird über eine geeignete Ringdüse (nicht dargestellt) zugeführt. Der Berührungspunkt 52 kann jedoch auch eine kurze axiale Berührungsstrecke sein, wenn die Oberfläche 51 bereichsweise axial verläuft.

Der Reibring 50 ist undrehbar ausgebildet. Er ist jedoch in Achsrichtung der Wellen 11, 35, 47 verstellbar. Zum Verstellen dient eine Verstelleinheit 53, die in der genannten Richtung verfahrbar ist, wie mit einem Pfeil 54 angedeutet. Die Verstelleinheit 53 wird in ihrer Verstellbewegung über einen Steuereingang 55 betätigt.

In den Reibkegeln 40a, 40b kann eine mit 57 angedeutete Anpreß-Kraftregelung vorgesehen sein, die in den Berührungspunkten 52 eine konstante oder eine drehzahlabhängig bzw. drehmomentabhängig geregelte Anpreßkraft einstellt.

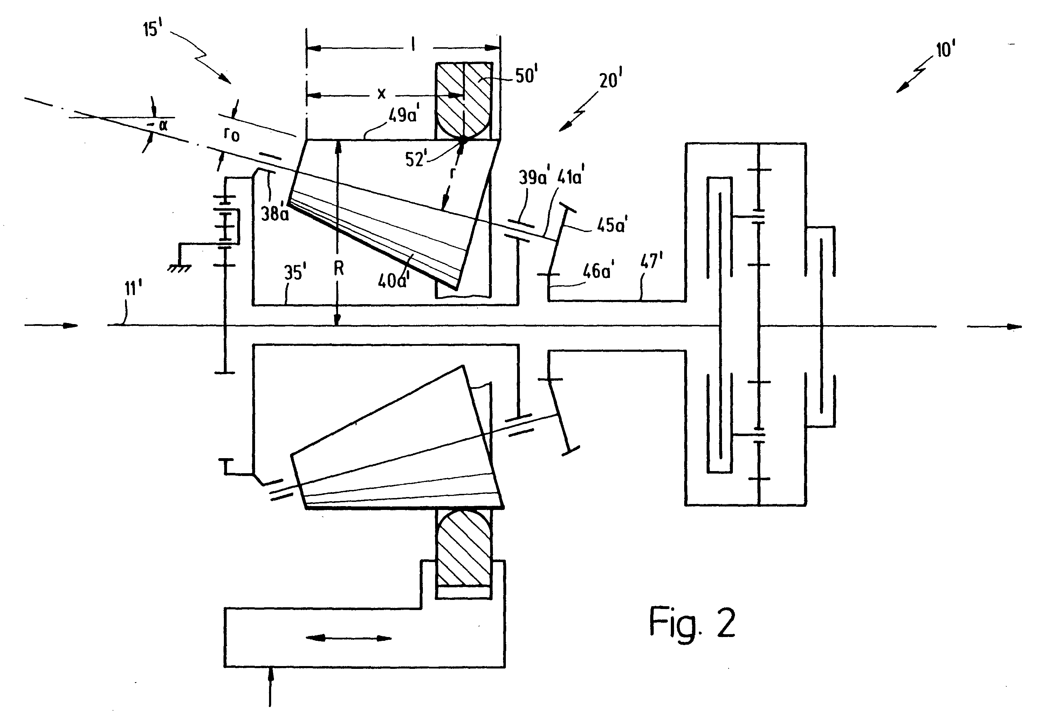

An dieser Stelle darf kurz auf Fig. 2 verwiesen werden, wo eine geringfügig variierte Ausführungsform dargestellt ist. Gleiche Bezugszeichen sind dabei durch Hinzufügung eines Apostroph gekennzeichnet.

Man erkennt bei der Variante gemäß Fig. 2, daß dort die Wellen 41a' gerade gegenläufig zur Achsrichtung angestellt sind, wie mit der Winkelangabe -$\alpha$ angedeutet. Die Lager 38a', 39a' befinden sich daher an radial entgegengesetzten Positionen, verglichen mit denen der Lager 38a, 39a in Fig. 1.

Darüber hinaus ist auch denkbar, die Reibkegel so anzuordnen, daß sich der Reibring zwischen den Reibkegeln und nicht außerhalb der Reibkegel befindet, wobei dann die zur Achsrichtung parallele Mantellinie jeweils innen und nicht außen liegt.

Fig. 1 zeigt ferner die im vorliegenden Zusammenhang interessierenden geometrischen Größen, die das Übersetzungsverhältnis $i_R$ der Reibkegelanordnung bestimmen.

Bei dem Reibkegel 40a betrage der kleine Radius des Kegels am spitzen Ende $r_0$. Im Berührungspunkt 52 beträgt der Radius gerade r. Der Berührungspunkt 52 ist um einen Betrag x auf der Mantellinie vom spitzen Ende des Reibkegels 40a beabstandet, dessen Gesamtlänge 1 beträgt. Der Abstand der Mantellinie 49a von der Achse der Welle 11 beträgt R. Mit diesen geometrischen Größen läßt sich für das Übersetzungsverhältnis $i_R$ bei den Getrieben 10 gemäß Fig. 1 bzw. 10' gemäß Fig. 2 folgende Gleichung angeben:

$$i_R = [r_0 + (1 - x) \sin \alpha]/R \qquad \text{(Fig. 1)}$$

$$i_R = r/R = (r_0 + x \sin \alpha)/R \qquad \text{(Fig. 2)}$$

Wenn also der Reibring 50 entlang der Strecke 1 bewegt wird, ist durch die Grenzwerte x = 0 und x = 1 der Übersetzungsbereich des Reibradgetriebes bestimmt.

In der in langsame Drehzahlen übersetzenden Übersetzungsstufe 25 wird die Eingangsdrehzahl $n_1$ untersetzt, d.h. herunterübersetzt. Das Übersetzungsverhältnis liegt bspw. zwischen 1,5 und 3,5. Für ein spezielles Ausführungsbeispiel wurde das Untersetzungsverhältnis mit 2,0769 bestimmt.

Die Drehzahl $n_3$ der Reibkegel 40a, 40b ergibt sich als Produkt der Eingangsdrehzahl $n_1$ multipliziert mit dem Übersetzungsverhältnis der Übersetzungsstufe 25 und dem Übersetzungsverhältnis $i_R$ der Reibkegelanordnung. Dieses Übersetzungsverhältnis $i_R$ liegt im Bereich zwischen 0,1 und 0,7. Für eine spezielle Anordnung wurde ein Bereich zwischen 0,2 und 0,4 berechnet. Das die Werte für $i_R$ kleiner als 1 sind, werden die Drehzahlen übersetzt, d.h. ins Schnelle übersetzt. Aufgrund dessen drehen sich die Reibkegel 40a, 40b in den Berührungspunkten 52 mit sehr hoher Drehzahl, so daß bei vergleichbarer Leistung das dort übertragene Drehmoment relativ gering ist.

Der ersten Getriebestufe 20 ist nun die zweite Getriebestufe 21 nachgeschaltet, die, wie bereits erwähnt, als Summiergetriebe ausgebildet ist. Im dargestellten Ausführungsbeispiel gemäß der Figur 1 ist das Summiergetriebe als einfacher Planetensatz 60 ausgeführt. Der Planetensatz 60 umfaßt in herkömmlicher Bauweise ein Sonnenrad 61, Planetenräder 62 sowie ein Hohlrad 63. Die Planetenräder 62 sitzen auf einem gemeinsamen Steg 66.

Eine erste Kupplung 67 verbindet nun das rechte freie Ende der Eingangswelle 11, die durch die Hohlwellen 35 und 47 hindurchreicht, mit dem Steg 66, wenn die erste Kupplung 67 geschlossen ist.

Das Hohlrad 63 des Planetensatzes 60 ist mit einem radialen Flansch 68 versehen, der in eine zweite Kupplung 69 ausläuft. Die zweite Kupplung 69 dient dazu, den Flansch 68 und damit das Hohlrad 63 mit der Ausgangswelle 13 zu verbinden, wenn die zweite Kupplung 69 geschlossen ist. Das Hohlrad 63 ist ferner über einen weiteren Flansch drehfest mit der zweiten Hohlwelle 47 verbunden. Die Ausgangswelle 13 ist ferner drehstarr mit dem Sonnenrad 61 verbunden. Die Drehzahl der Ausgangswelle 13 ist in Fig. 1 mit $n_4$ bezeichnet.

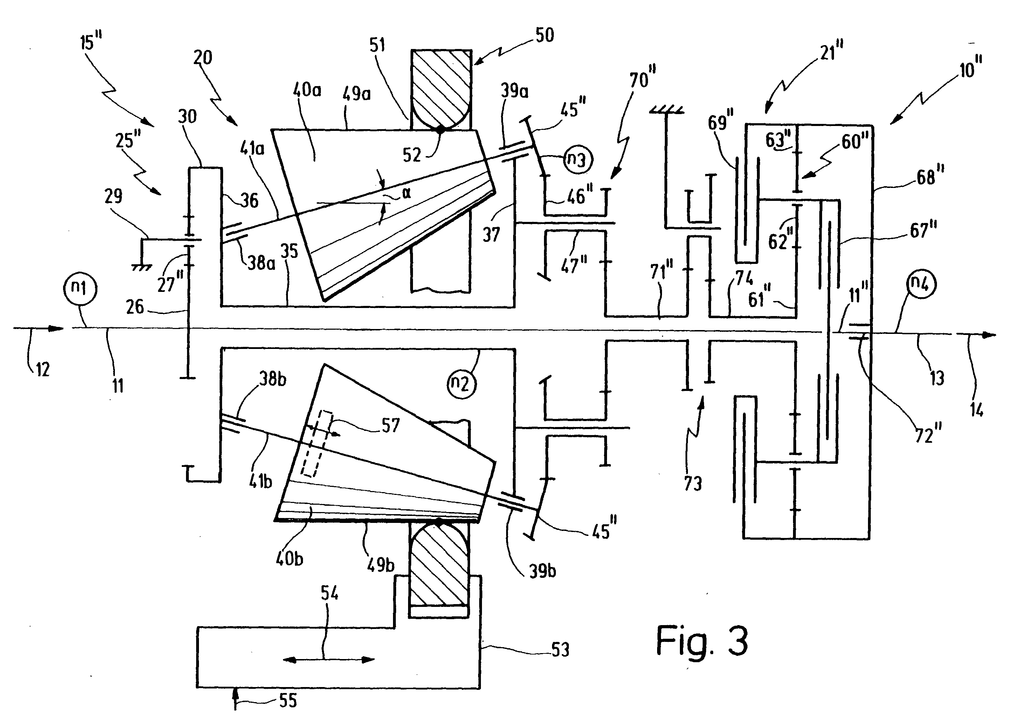

In Fig. 3 ist eine weitere Variante des Getriebes gemäß Fig. 1 dargestellt. Ähnliche Elemente sind mit entsprechenden Bezugszeichen, jedoch unter Hinzufügung eines doppelten Apostroph bezeichnet. Abwandlungen bestehen jeweils in der Gestaltung der Untersetzungsstufe 25 bzw. 25" sowie der zweiten Getriebestufe 21 bzw. 21".

Bei dem Getriebe gemäß Fig. 3 kommen eine weitere zusätzliche Getriebestufe 73 sowie Übersetzungsänderungen der Ursprungs-Getriebestufen zum Einsatz. Mit Hilfe dieser ist eine Getriebeanpassung möglich. Die zusätzlichen Getriebestufen 25", 73 und ein Radsatz 70" bilden mit der ersten Getriebestufe 20 in diesem Falle das Hauptgetriebe 15.

Bei dem Getriebe 10" gemäß Fig. 3 ist die Untersetzungsstufe 25" mit Vorzeichenumkehr ausgebildet. Das bedeutet, daß nur ein Planetenrad 27" im Planetensatz vorgesehen ist. Die Drehzahlen sind daher gerade umgekehrt.

Eine weitere Abwandlung besteht ferner darin, daß die zweite Hohlwelle 47" auf einen separaten, der ersten Getriebestufe nachgeschalteten Radsatz 70" geführt ist. Bei diesem ist der Steg des Planetensatzes mit dem Steg der ersten Getriebestufe 20 verbunden. Die Planetenräder 46" treiben eine weitere Hohlwelle 71" an. Auf diese Weise wird also eine feste Übersetzung eingestellt.

Die als Ausgang dieses Planetensatzes wirkende Hohlwelle 71" ist jedoch an eine der zweiten Getriebestufe 21" vorgeschaltete Übersetzung 73 angeschlossen, die die Gestalt eines doppelten Planetensatzes hat. Bei diesem ist der Steg raumfest gehalten. Den Ausgang dieses doppelten Planetensatzes bildet noch eine weitere Hohlwelle 74.

Die Hohlwelle 74 treibt das Sonnenrad 61" des Planetensatzes 60", dessen Planetenrad 62" von einem Steg gehalten ist, der einerseits an der ersten Kupplung 67" und andererseits an der zweiten Kupplung 69" anliegt. Der andere Eingang der ersten Kupplung 67" ist mit der Eingangswelle 11" verbunden. Der andere Eingang der zweiten Kupplung 69" ist über den Flansch 68" mit der Ausgangswelle 13 verbunden. Die Eingangswelle 11" ist bei diesem Ausführungsbeispiel über eine Lagerung 72" colinear zur Ausgangswelle 13 im Flansch 68" gelagert.

In Fig. 3 besteht das Hauptgetriebe 15" aus den Planetensätzen 20, 25" und 73" und aus dem Radsatz 70". Der Planetensatz 60" gehört nicht zum Hauptgetriebe 15" sondern zur zweiten Getriebestufe 21".

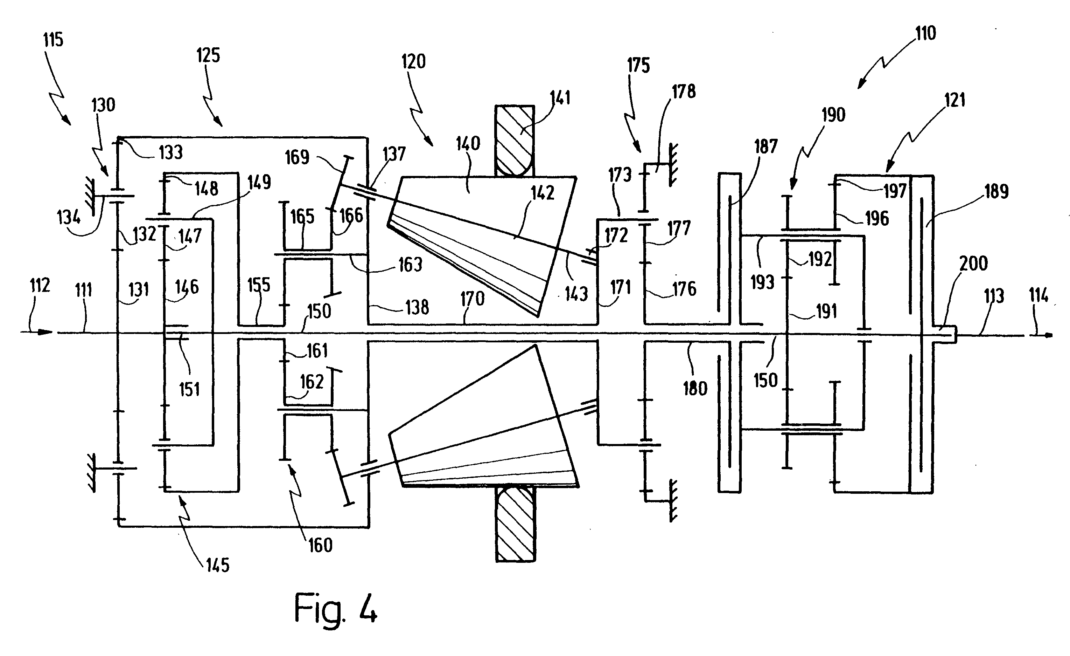

Das in Fig. 4 dargestellte Getriebe 110 weist eine Eingangswelle 111 auf, über die Eingangsleistung in das Getriebe 110 eingebracht wird, wie mit einem Pfeil 112 angedeutet. Am Ausgang des Getriebes 110 ist eine Ausgangswelle 113 zu erkennen, von der Ausgangsleistung abgenommen werden kann, wie mit einem Pfeil 114 angedeutet.

Auch das Getriebe 110 ist in eine erste Getriebestufe 120 mit kontinuierlich veränderbarem Übersetzungsverhältnis sowie eine zweite Getriebestufe 121, die als Summiergetriebe wirkt, unterteilt.

Der ersten Getriebestufe 120 ist wiederum eine Untersetzungsstufe 125 vorgeschaltet.

Die Eingangswelle 111 treibt einen ersten Planetensatz 130 an, und zwar dessen Sonnenrad 131. Der erste Planetensatz 130 umfaßt ferner Planetenräder 132 sowie ein Hohlrad 133. Ein Steg 134 der Planetenräder 132 ist raumfest gehalten.

Das Hohlrad 133 trägt Lager 137 für die erste Getriebestufe 120. Zu diesem Zweck läuft das Hohlrad 133 an seinem in Fig. 4 rechten Ende in einen radialen Flansch 138 aus.

Die erste Getriebestufe 120 umfaßt wiederum Reibkegel 140, die mit einem Reibring 141 zusammenwirken, wie dies bereits erläutert wurde. Mit 142 sind die Achsen der Reibkegel 140 bezeichnet. An den Enden der Reibkegel 140 steht eine Welle 143 vor, die in der Achse 142 verläuft. Das linke Ende der Welle 143 ist in dem bereits erwähnten Lager 137 gelagert.

Die Eingangswelle 111 treibt darüber hinaus einen zweiten Planetensatz 145 an, und zwar dessen Sonnenrad 146. Der zweite Planetensatz 145 verfügt ferner über Planetenräder 147 sowie ein Hohlrad 148. Ein Steg 149 der Planetenräder 147 treibt eine Zwischenwelle 150 an, deren in Fig. 4 linkes Ende in einem Lager 151 in Verlängerung der Antriebswelle 111 gelagert ist.

Das Hohlrad 148 des zweiten Planetensatzes 145 treibt eine Hohlwelle 155, die die Zwischenwelle 150 koaxial umgibt. Die Hohlwelle 155 ist an einen dritten Planetensatz 160 angeschlossen, und zwar an dessen Sonnenrad 161.

Der dritte Planetensatz 160 ist als vierrädriger Planetensatz mit zwei axial beabstandeten Radsätzen ausgebildet. Das Sonnenrad 161 kämmt mit ersten Planetenrädern 162, die auf einem Steg 163 sitzen. Zu diesem Zweck sind die ersten Planetenräder 162 auf Hohlwellen 165 angeordnet.

Die Hohlwellen 165 tragen ferner als Kegelräder ausgebildete zweite Planetenräder 166. Diese wiederum kämmen mit Zahnrädern 169, die am linken Ende der Wellen 143 der Reibkegel 140 undrehbar angeordnet sind.

Der radiale Flansch 138 des Hohlrades 133 des ersten Planetensatzes 130 ist mit einer weiteren Hohlwelle 170 verbunden, die ebenfalls die Zwischenwelle 150 koaxial umgibt. Die weitere Hohlwelle 170 erstreckt sich über die Länge der Reibkegel 140 hinaus und trägt an ihrem in Fig. 4 rechten Ende einen radialen Flansch 171, der mit Lagern 172 für die rechten freien Enden der Wellen 143 versehen ist. Der Umfang des Flansches 171 bildet einen Steg 173 für einen vierten Planetensatz 175.

Der vierte Planetensatz 175 umfaßt ein Sonnenrad 176, Planetenräder 177 sowie ein Hohlrad 178. Das Hohlrad 178 ist raumfest gehalten. Das Sonnenrad 176 ist mit einer noch weiteren Hohlwelle 180 verbunden, die ebenfalls die Zwischenwelle 150 koaxial umgibt. Die Hohlwelle 180 ist mit den Innenlamellen (von denen in Fig. 4 nur eine dargestellt ist) einer ersten Kupplung 187 verbunden. Die erste Kupplung 187 ist Teil der zweiten Getriebestufe 121, zu der noch eine zweite Kupplung 189 gehört.

Das eigentliche Summiergetriebe der zweiten Getriebestufe 121 wird durch einen fünften Planetensatz 190 gebildet, der aus einem Sonnenrad 191, Planetenrädern 192 und 196 sowie einem Steg 193 besteht. Ferner gehört dazu ein Hohlrad 197.

Wie man leicht erkennt, ist der Steg 193 mit der Außenlamelle der ersten Kupplung 187 verbunden.

Das Sonnenrad 191 des fünften Planetensatzes 190 wird von der Zwischenwelle 150 angetrieben. Das Hohlrad 197 ist fest mit der Außenlamelle der zweiten Kupplung 189 verbunden. Deren Innenlamelle steht wiederum drehfest mit Zwischenwelle 150 in Verbindung.

Schließlich erkennt man noch, daß das rechte freie Ende der Zwischenwelle 150 in einem Lager 200 gelagert ist, das in Verlängerung der Ausgangswelle 113 angeordnet ist.

Bei dem Getriebe 110 gemäß Fig. 4 bildet die erste Getriebestufe 120, wie erwähnt, den Variator. Die zweite Getriebestufe 121 bildet, wie ebenfalls bereits erwähnt, ein Summiergetriebe. Das Hauptgetriebe 115 umfaßt die Planetensätze 120, 130, 145, 160 und 175. Der Planetensatz 190 ist dem Summiergetriebe zugeordnet.

Eine dritte Getriebestufe wird durch den ersten Planetensatz 130 dargestellt, der als Reduzierungssatz wirkt. Eine vierte Getriebestufe wird durch den dritten Planetensatz 160 gebildet, der als Koppelsatz wirkt. Eine fünfte Getriebestufe stellt der vierte Planetensatz 175 dar, der als Zwischensatz wirkt. Eine sechste Getriebestufe besteht schließlich aus dem zweiten Planetensatz 145, der einen Leistungsteilungssatz darstellt. Ein derartiger Zwischensatz und Leistungsteilungssatz ist in den Ausführungsbeispielen gemäß den Fig. 1 bis 3 und 32 nicht enthalten.

Der Zwischensatz wird eingangsseitig mit der Eingangsdrehzahl der ersten Getriebestufe 120 bzw. mit der Ausgangsdrehzahl der dritten Getriebestufe 130 angetrieben, und sein Ausgang ist mit der ersten Kupplung 187 verbunden.

Der Leistungsteilungssatz hingegen enthält drei Anschlüsse, von denen ein erster mit der Eingangswelle 111, ein zweiter mit dem Ausgang der ersten Getriebestufe 120 und ein dritter mit der zweiten Kupplung 189 verbunden ist.

Durch den Leistungsteilungssatz wird bewirkt, daß eine Leistungsteilung der Antriebsleistung in der direkten Betriebsart sowie eine Teilung der Blindleistungsrückführung in der Lastbetriebsart erfolgt. Der Leistungsfluß über den Variator wird durch die Größe der Übersetzung des Verteilungssatzes bestimmt. Dieser bewirkt ferner, daß in der Synchronisation der Leistungsanteil, der durch den Variator fließt, zwischen 20 % und 60 % der Blindleistung oder der Antriebsleistung entspricht, vorzugsweise etwa 22,9 %.

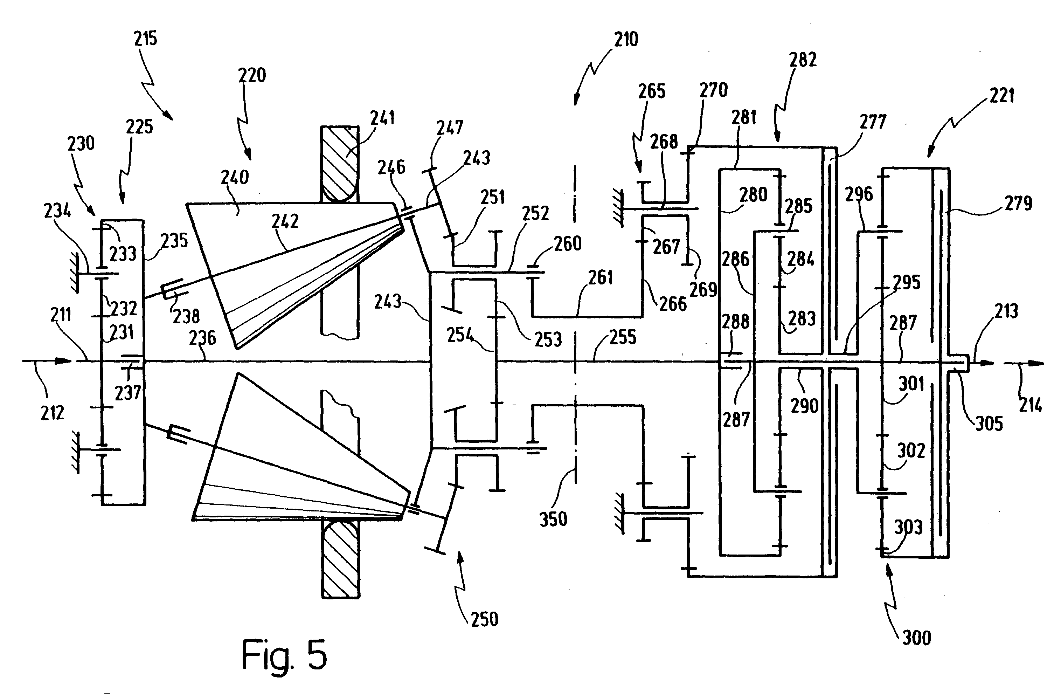

Fig. 5 zeigt schließlich ein weiteres Getriebe 210 mit einer Eingangswelle 211, der Leistung entlang eines Pfeils 212 zugeführt werden kann. Von einer Ausgangswelle 213 ist Leistung in Richtung eines Pfeils 214 abnehmbar. Das Getriebe 210 weist wiederum eine erste Getriebestufe 220 sowie eine zweite Getriebestufe 221 auf. Eine Untersetzungsstufe ist mit 225 bezeichnet.

Die Untersetzungsstufe 225 wird durch einen Planetensatz 230 gebildet. Dieser umfaßt ein Sonnenrad 231, Planetenräder 232 sowie ein Hohlrad 233. Ein gemeinsamer Steg 234 der Planetenräder 232 ist raumfest gehalten.

Ein radialer Flansch 235 des Hohlrades 233 ist zu einer ersten Zwischenwelle 236 geführt. Die erste Zwischenwelle 236 erstreckt sich in Verlängerung der Eingangswelle 211 und ist in dieser mittels eines Lagers 237 gelagert. Der Flansch 235 trägt ferner ein weiteres Lager 238 für Reibkegel 240 der ersten Getriebestufe 220. Die Reibkegel 240 wirken wiederum mit einem Reibring 241 zusammen. Die Achsen der Reibkegel 240 sind wiederum mit 242, deren Wellen mit 243 bezeichnet. Ein radialer Flansch 245, der sich in Fig. 5 am rechten Ende der ersten Zwischenwelle 236 befindet, trägt ein weiteres Lager 246 für die Reibkegel 240. Am rechten freien Ende der Wellen 243 sind Zahnräder 247 angeordnet.

Wie man leicht durch Vergleich der Fig. 4 und 5 erkennen kann, sind die Reibkegel 140 bzw. 240 entgegengesetzt gerichtet, weil in Fig. 4 die ausgangsseitigen Zahnräder 169 der Reibkegel 140 zur Eingangswelle 111 hin gerichtet sind, während Fig. 5 eine Anordnung zeigt, bei der die Ausgangszahnräder 247 der Reibkegel 240 zur Ausgangswelle 213 hin gerichtet sind.

Während also beim Getriebe 110 gemäß Fig. 4 der Leistungsfluß vom Ausgang der ersten Getriebestufe 120 zunächst nach links (über den dritten Planetensatz 160) und dann wieder zurück nach rechts (über den zweiten Planetensatz 145) gesteuert wird, stellt Fig. 5 mit dem Getriebe 210 eine Anordnung dar, bei der der Haupt-Leistungsfluß insgesamt von links nach rechts läuft.

Die Zahnräder 247 stehen mit einem Planetensatz 250 in Verbindung, der als Doppelplanetensatz ausgebildet ist und insoweit dem dritten Planetensatz 160 (Koppelsatz) gemäß Fig. 4 entspricht. Der Planetensatz 250 umfaßt erste, als Kegelräder ausgebildete Planetenräder 251, einen gemeinsamen Steg 252 sowie zweite Planetenräder 253, die mit einem Sonnenrad 254 kämmen.

Das Sonnenrad 254 steht mit einer zweiten Zwischenwelle 255 in Verbindung, die sich colinear zur ersten Zwischenwelle 236 erstreckt.

Der gemeinsame Steg 252, der mit dem Träger 235, 236, 245 der Reibkegel 240 umläuft, ist an seinem in Fig. 5 rechten Ende mit Lagern 260 versehen, die über einen radialen Flansch mit einer Hohlwelle 261 in Verbindung stehen. Die Hohlwelle 261 umgibt die zweite Zwischenwelle 255 koaxial.

Die Hohlwelle 261 steht mit einem Planetensatz 265 in Verbindung, der dem vierten Planetensatz 175 (Zwischensatz) gemäß Fig. 4 entspricht. Der Planetensatz 265 ist ebenfalls als vierrädriger Planetensatz ausgebildet. Er umfaßt ein Sonnenrad 266 und damit kämmende erste Planetenräder 267, einen gemeinsamen Steg 268 sowie weitere Planetenräder 269, die mit einem Hohlrad 270 kämmen.

Das Hohlrad 270 ist mit der Außenlamelle einer ersten Kupplung 277 verbunden, die ebenso wie eine zweite Kupplung 279 zur zweiten Getriebestufe 221 gehört.

Das in Fig. 5 rechte freie Ende der zweiten Zwischenwelle 255 trägt einen radialen Flansch 280, der zugleich ein Hohlrad 281 eines Planetensatzes 282 bildet.

Der Planetensatz 282 entspricht dem zweiten Planetensatz 145 (Leistungsteilungssatz) in Fig. 4.

Der Planetensatz 282 umfaßt ein Sonnenrad 283, Planetenräder 284 sowie einen Steg 285.

Der Steg 285 steht über einen radialen Flansch 286 mit einer dritten Zwischenwelle 287 in Verbindung, die sich ebenfalls colinear zu den Wellen 236, 255 erstreckt. Ihr in Fig. 5 linkes Ende ist in einem Lager 288 in Fortsetzung der zweiten Zwischenwelle 255 gelagert.

Das Sonnenrad 283 des Planetensatzes 282 ist an eine Hohlwelle 290 angeschlossen, die ebenfalls mit der Außenlamelle der ersten Kupplung 277 in Verbindung steht.

Eine weitere Hohlwelle 295, die sich colinear zur Hohlwelle 290 erstreckt und ebenso wie diese die dritte Zwischenwelle 287 koaxial umgibt, verbindet die Innenlamelle der ersten Kupplung 277 mit einem Steg 296 eines Planetensatzes 300.

Der Planetensatz 300 entspricht dem fünften/ sechsten Planetensatz 190/195 bzw. der zweiten Getriebestufe (Summiergetriebe) in Fig. 4.

Der Planetensatz 300 umfaßt ein Sonnenrad 301, ein Planetenrad 302 sowie ein Hohlrad 303. Das Sonnenrad 301 sitzt drehfest auf der dritten Zwischenwelle 287. Das Hohlrad 303 ist mit der Außenlamelle der zweiten Kupplung 279 verbunden. Deren Innenlamelle sitzt drehfest auf der dritten Zwischenwelle 287. Das in Fig. 5 rechte freie Ende der dritten Zwischenwelle 287 ist in einem Lager 305 gelagert, das in axialer Verlängerung der Ausgangswelle 213 angeordnet ist.

Das Hauptgetriebe 215 umfaßt die Planetensätze 220, 230, 250, 265 und 282. Der Planetensatz 300 ist dem Summiergetriebe zugeordnet.

Wie bereits erwähnt, entspricht das Getriebe 210 gemäß Fig. 5 funktionell weitgehend dem Getriebe 110 gemäß Fig. 4. Bei beiden Getrieben ist jeweils eine erste Getriebestufe 120/220 als Getriebe mit kontinuierlich veränderbaren Übersetzungsverhältnis vorgesehen. Eine zweite Getriebestufe 121/221 dient als Summiergetriebe. Eine dritte Getriebestufe 130/230 dient als Reduzierungssatz. Eine vierte Getriebestufe 160/250 ist als Koppelsatz ausgebildet. Eine fünfte Getriebestufe 175/265 dient als Zwischensatz, und eine sechste Getriebestufe 145/282 ist als Leistungsteilungssatz ausgebildet.

Bei allen bisher beschriebenen Ausführungsbeispielen ist die Anordnung so, daß das jeweilige Hauptgetriebe sowie die jeweilige zweite Getriebestufe sowohl in sich selbst koaxial wie auch zueinander koaxial entlang einer gemeinsamen Hauptachse ausgerichtet sind. Die Ausführungsform des erfindungsgemäßen Getriebes eignet sich insbesondere für solche Fälle, bei denen das Getriebe in Längsrichtung des Fahrzeugs eingebaut wird. Dann ist die Längsabmessung des Getriebes kein sehr kritischer Faktor.

Wenn hingegen das Getriebe quer zur Längsrichtung des Fahrzeugs eingebaut werden soll, insbesondere bei sogenannten Front-Quer-Antrieben, kann es zweckmäßig sein, eine andere Ausführungsform zu wählen.

In Fig. 5 ist mit 350 eine strichpunktierte Linie zu erkennen, die die Welle 255 und die Hohlwelle 261 schneidet.

Man kann konstruktiv das Getriebe 210 in dieser Ebene schneiden und die beiden dann entstehenden Getriebeteile nebeneinander un vorzugsweise achsparallel anordnen. So könnte man z.B. in Fig. 5 denjenigen Teil des Getriebes 210, der sich in der Darstellung links der strichpunktierten Linie 350 befindet, um die Achse der Linie 350 spiegelsymmetrisch kippen und nach unten verschieben. Die dann freien Stümpfe der Wellen 255 und 261 können dann über geeignete Radsätze miteinander verbunden werden. Auf diese Weise entstünde dann ein Getriebe von nur etwa halber axialer Baulänge.

**Patentansprüche**

1. Kraftfahrzeuggetriebe mit stufenlos veränderbarem Übersetzungsverhältnis, mit einer Getriebeeingangswelle (11; 111; 211), einer Getriebeausgangswelle (13; 113; 213), einer, einen Teil eines Hauptgetriebes (15; 105; 115; 215) bildenden ersten Getriebestufe (20; 120; 220) mit kontinuierlich einstellbarem Übersetzungsverhältnis und einer als Summiergetriebe wirkenden zweiten Getriebestufe (21; 121; 211), wobei die mit einer Antriebsdrehzahl ($n_1$) umlaufende Getriebeeingangswelle (11; 111; 121) einerseits mit dem Eingang der ersten Getriebestufe (20; 120; 220) und andererseits über eine erste Kupplung (67; 187; 227) mit einem ersten Eingang der zweiten Getriebestufe (21; 121; 221) verbunden ist, wobei ferner der Ausgang der ersten Getriebestufe (20; 120; 220) einerseits mit einem zweiten Eingang der zweiten Getriebestufe (21; 121; 221) und andererseits über eine zweite Kupplung (69; 189; 279) mit der Getriebeausgangswelle (13; 113; 213) verbunden ist, die zugleich den Ausgang der zweiten Getriebestufe (21; 121; 221) bildet, und die erste Getriebestufe (20; 120; 220) als Reibkörpergetriebe, insbesondere als Reibrad-Umlaufgetriebe, ausgebildet ist, bei dem zwei Reibkörper (40, 50; 140, 141; 240, 241) in einem Bereich (52) reibschlüssig aneinanderliegen, von denen mindestens einer (40; 140; 240) eine Reibkörperwelle (41; 143; 243) umfaßt, die mit vorbestimmter Drehzahl ($n_3$) umläuft, **dadurch gekennzeichnet, daß** das Übersetzungsverhältnis ($n_3/n_1$) zwischen Getriebeeingangswelle (11; 111; 211) und Reibkörperwelle (41; 143; 243) derart bemessen ist, daß der mindestens eine umlaufende Reibkörper (40; 140; 240) über den gesamten Übersetzungsbereich mit höherer Drehzahl ($n_3$) als die Antriebsdrehzahl ($n_1$) umläuft, wobei die Eingangswelle (11; 111; 211) mit einem eine Lagerung (38a, 39a; 137, 172; 238, 246) für die Reibkörperwelle (41; 143; 243) aufweisenden Flansch (36; 138; 171; 235, 243) in Verbindung steht, derart, daß die höhere Drehzahl ($n_3$) proportional vom jeweiligen Übersetzungsverhältnis ($i_R$) des Reibkörpergetriebes abhängt.

2. Getriebe nach Anspruch 1, **dadurch gekennzeichnet, daß** das Hauptgetriebe (15; 115; 215) und die zweite Getriebestufe (21; 121; 221) in sich und zueinander bezüglich einer gemeinsamen Hauptachse koaxial angeordnet sind.

3. Getriebe nach Anspruch 1, **dadurch gekennzeichnet, daß** das Hauptgetriebe (15; 115; 215) und die zweite Getriebestufe (21; 121; 221) jeweils in sich koaxial, jedoch auf zwei zueinander parallelen Hauptachsen angeordnet sind.

4. Getriebe nach einem oder mehreren der Ansprüche 1 bis 3, **dadurch gekennzeichnet, daß** die erste Getriebestufe (20; 120; 220) als Umlaufgetriebe ausgebildet ist.

5. Getriebe nach einem oder mehreren der Ansprüche 1 bis 4, **dadurch gekennzeichnet, daß** die zweite Getriebestufe (21; 121; 221) nur aus einem dreiwelligen Planetensatz besteht.

6. Getriebe nach einem oder mehreren der Ansprüche 1 bis 5, **dadurch gekennzeichnet, daß** die erste Getriebestufe (20; 120; 220) ein Übersetzungsverhältnis aufweist, das im Bereich zwischen 0,1 und 0,7, vorzugsweise zwischen 0,2 und 0,4, vorzugsweise zwischen 0,162 und 0,457, weiter vorzugsweise zwischen 0,17 und 0,42 kontinuierlich verstellbar ist.

7. Getriebe nach einem oder mehreren der Ansprüche 1 bis 6, **dadurch gekennzeichnet, daß** dem Reibkörpergetriebe im Hauptgetriebe (15; 115; 215) eine in langsamere Drehzahlen übersetzende und als Reduzierungssatz wirkende, dritte Getriebestufe (25; 130; 230) vorgeschaltet ist, die eine Eingangsdrehzahl ($n_1$) des Getriebes (10; 110; 210) in eine langsamere Zwischendrehzahl übersetzt.

8. Getriebe nach Anspruch 7, **dadurch gekennzeichnet, daß** die dritte Getriebestufe (25; 130; 230) ein Übersetzungsverhältnis zwischen +1,5 und +3,5, vorzugsweise etwa 2,07692 oder zwischen -1,5 und -3,5, vorzugsweise etwa -1,90 oder -2,24, aufweist.

**9.** Getriebe nach einem oder mehreren der Ansprüche 1 bis 8, **dadurch gekennzeichnet, daß** die dritte Getriebestufe (25; 130, 230) ein Planetensatz ist, der vorzugsweise mit einer korrespondierenden Übersetzung eines Zwischensatzes (265) einen Synchronisationspunkt bestimmt.

**10.** Getriebe nach Anspruch 9, **dadurch gekennzeichnet, daß** dem Planetensatz über das Sonnenrad (26; 131; 231) Leistung zugeführt wird.

**11.** Getriebe nach Anspruch 9 oder 10, **dadurch gekennzeichnet, daß** der Steg (29; 134; 234) des Planetensatzes raumfest gehalten ist.

**12.** Getriebe nach einem oder mehreren der Ansprüche 9 bis 11, **dadurch gekennzeichnet, daß** vom Hohlrad (30; 133; 233) des Planetensatzes Leistung zur ersten Getriebestufe (20; 120; 220) geführt wird.

**13.** Getriebe nach einem oder mehreren der Ansprüche 1 bis 12, **dadurch gekennzeichnet, daß** im Hauptgetriebe (15; 115; 215) der Ausgang der ersten Getriebestufe (20; 120; 220) über eine als Koppelsatz wirkende vierte Getriebestufe (45, 46; 160; 250) mit dem zweiten Eingang der zweiten Getriebestufe (21; 121; 221) verbindbar ist, wobei die vierte Getriebestufe (45, 46; 160) in langsamere oder in schnellere Drehzahlen übersetzt, und vorzugsweise ein Übersetzungsverhältnis zwischen -1,2 und -2,8, insbesondere etwa -2,32143 bzw. zwischen +0,5 und +2,0, insbesondere etwa +1,2434 oder +1,435, aufweist.

**14.** Getriebe nach einem oder mehreren der Ansprüche 1 bis 13, **dadurch gekennzeichnet, daß** die erste Getriebestufe (20; 120; 220) eine Welle (35; 170; 236) umfaßt, an der mindestens ein Reibkegel (40; 140; 240) derart angeordnet ist, daß dessen Achse (41; 142; 242) um den halben Öffnungswinkel ($\alpha$) des Reibkegels (40; 140; 240) zur Welle (35; 170; 263) geneigt und der Reibkegel (40; 140; 240) um seine Achse (41; 142; 242) drehbar ist, daß ein vorzugsweise undrehbarer Reibring (50; 141; 241) koaxial zur Welle (35; 170; 236) so angeordnet ist, daß er an einem Bereich, vorzugsweise an einem Punkt (52), reibschlüssig an der parallel zur Welle (35; 170; 236) verlaufenden Mantellinie (49) des Reibkegels (40; 140; 240) anliegt und in Richtung (54) der Welle (35; 170; 236) verschiebbar ist, so daß der Punkt (52) entlang der Mantellinie (49) wandert, und daß die Drehzahl des Reibkegels (40; 140; 240) als Ausgangsdrehzahl der ersten Getriebestufe (20; 120; 220) über ein Sonnenrad (46; 161; 254) abnehmbar ist.

**15.** Getriebe nach Anspruch 14, **dadurch gekennzeichnet, daß** ein mit dem Reibkegel (40; 240) undrehbar verbundenes Zahnrad (45; 247) zur Ausgangswelle (13; 213) hin gerichtet ist.

**16.** Getriebe nach Anspruch 14, **dadurch gekennzeichnet, daß** ein mit dem Reibkegel (140) undrehbar verbundenes Zahnrad (169) zur Eingangswelle (111) hin gerichtet ist.

**17.** Getriebe nach Anspruch 14 oder 15, **dadurch gekennzeichnet, daß** die den mindestens einen Reibkegel (40) tragende Welle (35) als erste Hohlwelle ausgebildet ist, daß das Sonnenrad (46) auf einer zweiten Hohlwelle (47) sitzt, und daß die Getriebeeingangswelle (11) die miteinander fluchtenden Hohlwellen (35, 47) durchsetzt.

**18.** Getriebe nach Anspruch 14 oder 15, **dadurch gekennzeichnet, daß** die den mindestens einen Reibkegel (240) tragende Welle (236) als Zwischenwelle in Verlängerung der Eingangswelle (211) angeordnet und mit einem Steg (252) verbunden ist, und daß ein auf dem Steg (252) drehbar angeordnetes Planetenrad (253) mit dem Sonnenrad (254) kämmt.

**19.** Getriebe nach einem oder mehreren der Ansprüche 14 bis 18, **dadurch gekennzeichnet, daß** der halbe Öffnungswinkel ($\alpha$) zwischen 10° und 20°, vorzugsweise bei 17°, liegt.

**20.** Getriebe nach einem oder mehreren der Ansprüche 14 bis 19, **dadurch gekennzeichnet, daß** der Reibkegel (50) mit einem drehmomentabhängigen Regler (57) zum Einstellen der Anpreßkraft im Punkt (52) versehen ist.

**21.** Getriebe nach einem oder mehreren der Ansprüche 1 bis 20, **dadurch gekennzeichnet, daß** die zweite Getriebestufe (21; 121; 221) als Summensatz in einer Lastbetriebsart eine Blindleistungsrückführung verwirklicht, die durch die erste Getriebestufe (20; 111; 121) fließt und weiter vorzugsweise zwischen 40 % und 75 % der Antriebsleistung in der Synchronisation, insbesondere 48 %, aufweist.

**22.** Getriebe nach einem oder mehreren der Ansprüche 5 bis 21, **dadurch gekennzeichnet, daß** eine erste Anschlußwelle, insbesondere der erste Eingang der zweiten Getriebestufe (21; 121; 221), durch den Steg (66; 193; 296) des mindestens einen Planetensatzes (60; 190, 195; 300) gebildet wird und mit dem konstanten Ausgang des Hauptgetriebes (15; 115; 215) verbunden ist, wobei vorzugsweise eine zweite Anschlußwelle, insbesondere der zweite Eingang der zweiten Getriebestufe (21), durch das Hohlrad (63) des Planetensatzes (60) gebildet wird und mit dem variablen Ausgang des Hauptgetriebes (15) verbunden ist, und wobei weiter vorzugsweise eine zweite Anschlußwelle, insbesondere der zweite Eingang der zweiten Getriebestufe (121; 221), durch das Sonnenrad (191; 301) des mindestens einen Planetensatzes (190, 195; 300) gebildet wird und mit der Getriebeausgangswelle (113; 213) verbunden ist.

23. Getriebe nach Anspruch 21 oder 22, **dadurch gekennzeichnet, daß** der Planetensatz ein Übersetzungsverhältnis zwischen -0,2 und -0,65, vorzugsweise etwa -0,43859 oder -0,294, oder zwischen -1,5 und -3,0, vorzugsweise etwa -1,731, oder zwischen +1,25 und +3,0, vorzugsweise +1,32, aufweist.

24. Getriebe nach einem oder mehreren der Ansprüche 1 bis 23, **dadurch gekennzeichnet, daß** eine als Zwischensatz wirkende, fünfte Getriebestufe (175; 265) als Planetensatz ausgebildet und im Hauptgetriebe (115; 215) angeordnet ist, wobei vorzugsweise die fünfte Getriebestufe (175; 265) eingangsseitig mit der Eingangsdrehzahl der ersten Getriebestufe (120; 220) angetrieben wird, daß ihr Ausgang mit der ersten Kupplung (187; 277) verbunden ist, weiter bevorzugt ein Element (178; 268) des Planetensatzes raumfest gehalten ist und das Element das Hohlrad (178) ist.

25. Getriebe nach Anspruch 24, **dadurch gekennzeichnet, daß** eine erste Anschlußwelle der fünften Getriebestufe (175), vorzugsweise der Steg (173), direkt oder über Konstant-Übersetzungen mit der Getriebeeingangswelle (111) verbunden ist.

26. Getriebe nach Anspruch 24, **dadurch gekennzeichnet, daß** eine erste Anschlußwelle der fünften Getriebestufe (265), vorzugsweise die Sonne (266), mit dem Ausgang der vierten Getriebestufe (250) verbunden ist.

27. Getriebe nach Anspruch 24 oder 25, **dadurch gekennzeichnet, daß** eine zweite Anschlußwelle der fünften Getriebestufe (175), vorzugsweise die Sonne (176), mit der ersten Kupplung (187) verbunden ist.

28. Getriebe nach einem oder mehreren der Ansprüche 24 bis 27, **dadurch gekennzeichnet, daß** der Planetensatz (175) ein Übersetzungsverhältnis zwischen -0,8 und -0,2, vorzugsweise etwa -0,495, oder zwischen +0,6 und +0,2, vorzugsweise etwa +0,495, aufweist.

29. Getriebe nach Anspruch 24, **dadurch gekennzeichnet, daß** das Element der Steg (268) ist, wobei bevorzugt eine erste Anschlußwelle der fünften Getriebestufe (265), vorzugsweise die Sonne (266), mit dem Eingang der ersten Getriebestufe (230) verbunden ist.

30. Getriebe nach Anspruch 29, **dadurch gekennzeichnet, daß** der Planetensatz (265) ein Übersetzungsverhältnis zwischen -1,3 und -4,0, vorzugsweise etwa -1,3153, oder zwischen +1,7 und +4,0, vorzugsweise etwa +1,7, aufweist.

31. Getriebe nach einem oder mehreren der Ansprüche 1 bis 30, **dadurch gekennzeichnet, daß** im Hauptgetriebe (115; 215) eine als Leistungsteilungssatz wirkende, sechste Getriebestufe (145; 282) vorgesehen ist, die als dreiwelliger Planetensatz ausgebildet ist, wobei vorzugsweise eine erste Anschlußwelle der sechsten Getriebestufe (145), insbesondere die Sonne (146), mit der Eingangswelle (119) verbunden ist, ferner bevorzugt eine zweite Anschlußwelle der sechsten Getriebestufe (145; 282), vorzugsweise das Hohlrad (148; 281), mit dem Ausgang der der ersten Getriebestufe (120; 220) nachgeschalteten vierten oder fünften Getriebestufe (160; 265) verbunden ist, und schließlich insbesondere eine dritte Anschlußwelle der sechsten Getriebestufe (145; 282), vorzugsweise der Steg (149; 283), mit der zweiten Kupplung (279; 189) verbunden ist.

32. Getriebe nach Anspruch 31, **dadurch gekennzeichnet, daß** die sechste Getriebestufe (145; 282) ein Übersetzungsverhältnis zwischen -1,5 und -3,5, vorzugsweise etwa -2,0526, oder zwischen +1,5 und +4,0 aufweist.

33. Getriebe nach Anspruch 31 oder 32, **dadurch gekennzeichnet, daß** die sechste Getriebestufe (145; 282) als Verteilungssatz wirkt, die in einer Last- bzw. einer Direkt-Betriebsart eine Leistungsteilung vornimmt, derart, daß in der Synchronisation zwischen 20 % und 60 % der Antriebsleistung durch die erste Getriebestufe fließt, insbesondere 32,2 % bzw. 55,9 %, wobei bevorzugt die sechste Getriebestufe (145; 282) ein Übersetzungsverhältnis zwischen -1,5 und -3,5, vorzugsweise etwa -2,0526, oder zwischen +1,5 und +4,0 aufweist.

## Claims

1. A motor vehicle transmission having a continuously variable transmission ratio and comprising a transmission input shaft (11; 111; 211), a transmission output shaft (13; 113; 213), a first transmission stage (20; 120; 220) with continuously variable transmission ratio forming part of a main transmission (15; 105; 115; 215), and a second transmission stage (21; 121; 221) configured as a summing transmission, the transmission input shaft (11; 111; 211) rotating with a rotational speed ($n_1$) and being

connected on the one hand side with the input of the first transmission stage (20; 120; 220) and on the other hand side via a first clutch (67; 187; 277) with a first input of the second transmission stage (21; 121; 221), the output of the first transmission stage (20; 120; 220), further, being connected on the one hand side with a second input of the second transmission stage (21; 121; 221) and, on the other hand side, via a second clutch (69; 189; 279) with the transmission output shaft (13; 113; 213) constituting also the output of the second transmission stage (21; 121; 221), the first transmission stage (20; 120, 220) being configured as a friction body transmission, in particular as a friction wheel epicyclic transmission in which two friction bodies (40, 50; 140, 141; 240, 241) contact each other in an area (52) under friction, at least one of which (40; 140; 240) comprising a friction body shaft (41; 143; 243) rotating at a predetermined rotational speed ($n_3$), **characterized in that** the transmission ratio ($n_3$, $n_1$) between the transmission input shaft (11; 111; 211) and the friction body shaft (41; 143; 243) are dimensioned such that the at least one rotating friction body (40; 140; 240) rotates at a higher rotational speed ($n_3$) as compared with the input rotational speed ($n_1$) over the entire range of transmission ratio, the input shaft (11; 111; 211) being connected to a flange (36; 138, 171; 235, 243) having a bearing (38a, 39a; 137, 172; 238, 246) for the friction body shaft (41; 143; 243) such that the higher rotational speed ($n_3$) depends proportionally from the prevailing transmission ratio ($i_R$) of the friction body transmission.

2. The transmission of claim 1, **characterized in that** the main transmission (15; 115; 215) and the second transmission stage (21; 121; 221) are arranged coaxial to each other and coaxial relative to a common main axis.

3. The transmission of claim 1, **characterized in that** the main transmission (15; 115; 215) and the second transmission stage (21; 121; 221) are each configured coaxially in itself but are arranged on two main axes being parallel to each other.

4. The transmission of one or more of claims 1 to 3, **characterized in that** the first transmission stage (20; 120; 220) is configured as an epicyclic transmission.

5. The transmission of one or more of claims 1 to 4, **characterized in that** the second transmission stage (21; 121; 221) consists solely of a three-shaft planetary gear train.

6. The transmission of one or more of claims 1 to 5, **characterized in that** the first transmission stage (20; 120; 220) has a transmission ratio that can be adjusted continuously between 0.1 and 0.7, preferably between 0.2 and 0.4, preferably between 0.162 and 0.457, further preferably between 0.17 and 0.42.

7. The transmission of one or more of claims 1 to 6, **characterized in that** a third transmission stage (25; 130; 230) transforming speed into slower speed and operating as a reducing gear set, is arranged in front of the friction body transmission within the main transmission (15; 115; 215), and converts an input speed ($n_1$) of the transmission (10; 110; 210) into a slower intermediate speed.

8. The transmission of claim 7, **characterized in that** the third transmission stage (25; 130; 230) has a transmission ratio of between +1.5 and +3.5, preferably about 2.07692, or of between -1.5 and -3.5, preferably about -1.90 or-2.24, respectively.

9. The transmission of one or more of claims 1 to 8, **characterized in that** the third transmission stage (25; 130; 230) is a planetary gear set, preferably determining a synchronization point through a corresponding transmission of an intermediate gear set (265).

10. The transmission of claim 9, **characterized in that** power is fed to the planetary gear set via the sun gear wheel (26; 131; 231).

11. The transmission of claim 9 or 10, **characterized in that** the arm (29; 134; 234) of the planetary gear set is held stationary.

12. The transmission of one or more of claims 9 to 11, **characterized in that** power is fed from the ring gear wheel (30; 133; 233) of the planetary gear set to the first transmission stage (20; 120; 220).

13. The transmission of one or more of claims 1 to 12, **characterized in that** within the main transmission (15; 115; 215) the output of the first transmission stage (20; 120; 220) may be connected with the second input of the second transmission stage (21; 121; 212) via a fourth transmission stage (45, 46; 160; 250) operating as a coupling set, wherein the fourth transmission stage (45, 46; 160) converts speed into slower or into faster speed, and has a transmission ratio of between -1.2 and -2.8, preferably about -2.32143, or of between +0.5 and +2.0, preferably about +1.2434 or +1.435, respectively.

14. The transmission of one or more of claims 1 to 13, **characterized in that** the first transmission stage (20; 120; 220) comprises a shaft (35; 170; 236) to which at least one friction cone (40; 140; 240) is arranged such that its axis (41; 142; 242) is inclined with respect to the shaft (35; 170; 263) by half the taper angle (α) of the friction cone (40; 140; 240), the friction cone (40; 140; 240) being rotatable about its axis (41; 142; 242), that a preferably non-rotational friction ring (50; 141; 241) is arranged coaxially with respect to the shaft (35; 170; 236) such that it frictionally contacts the outer surface line (49) parallel to the shaft (35; 170; 236) in an area, preferably in a point (52) and being displaceable in the direction (54) of the shaft (35; 170; 236), such that the point (52) wanders along the outer surface line (49), and that the rotational speed of the friction cone (40; 140; 240) may be taken as the output speed of the first transmission stage (20; 120; 220) via a sun gear wheel (46; 161; 254).

15. The transmission of claim 14, **characterized in that** a toothed wheel (45; 247) is directed towards the output shaft (13; 213), the toothed wheel (45; 247) being non-rotatably connected to the friction cone (40; 240).

16. The transmission of claim 14, **characterized in that** a toothed wheel (169) is directed towards the input shaft (111), the toothed wheel (169) being non-rotatably connected to the friction cone (140).

17. The transmission of claim 14 or 15, **characterized in that** the shaft (35) supporting the at least one friction cone (40) is configured as a first hollow shaft, the sun gear wheel (46) being seated on a second hollow shaft (47), and that the transmission input shaft (111) extends through the hollow shafts (35, 47), being flush with each other.

18. The transmission of claim 14 or 15, **characterized in that** the shaft (236) supporting the at least one friction cone (240) is configured as an intermediate shaft extending axially adjacent the input shaft (211) and being connected to an arm (252), and that a planetary gear wheel (253) is rotatably journalled on the arm (252) and meshes with the sun gear wheel (254).

19. The transmission of one or more of claims 14 to 18, **characterized in that** the half taper angle (α) is between 10° and 20°, preferably at about 17°.

20. The transmission of one or more of claims 14 to 19, **characterized in that** the friction cone (50) is provided with a torque-dependent controller (57) for setting the contact pressure force within point (52).

21. The transmission of one or more of claims 1 to 20, **characterized in that** the second transmission stage (21; 121; 221) is adapted to effect as a summing set and in a load mode of operation a feedback of reactive power flowing through the first transmission stage (20; 110; 120) and comprising, further, preferably between 40 % and 75 % of the drive power within the synchronization, in particular 48 %.

22. The transmission of one or more of claims 5 to 21, **characterized in that** a first connection shaft, in particular the first input of the second transmission stage (21; 121; 221) is configured by the arm (66; 193; 296) of the at least one planetary gear set (60; 190, 195; 300), and is connected with the constant output of the main transmission (15; 115; 215, wherein, preferably, a second connection shaft, in particular the second input of the second transmission stage (21) is configured by the ring gear wheel (63) of the planetary gear set (60), and is connected with the variable output of the main transmission (15), and wherein, further preferably a second connection shaft, in particular the second input of the second transmission stage (121; 221) is configured by the sun gear wheel (191; 301) of the at least one planetary gear set (190, 195; 300), and is connected with the transmission output shaft (113; 213).

23. The transmission of claim 21 or 22, **characterized in that** the planetary gear set has a transmission ratio of between -0.2 and -0.65, preferably about -0.43859 or -0.294, or of between -1.5 and -3.0, preferably about -1.731, or of between +1.25 and +3.0, preferably +1.32.

24. The transmission of one or more of claims 1 to 23, **characterized in that** a fifth transmission stage (175; 265) acting as an intermediate gear set, is configured as a planetary gear set and is arranged within the main transmission (115; 215), wherein, preferably, the fifth transmission stage (175; 265) is driven at its input with the input speed of the first transmission stage (120; 220), and that its output is connected with the first clutch (187; 277), wherein, further preferably, one of the elements (178; 268) of the planetary gear set is held stationary and the element is the ring gear wheel (178).

25. The transmission of claim 24, **characterized in that** a first connection shaft of the fifth transmission stage (175), preferably the arm (173), is connected with the transmission input shaft (111) either directly or via constant transmission ratios.

26. The transmission of claim 24, **characterized in that** a first connection shaft of the fifth transmission stage (265), preferably the sun gear wheel (266), is connected with the output of the fourth transmission stage (250).

27. The transmission of claim 24 or 25, **characterized in that** a second connection shaft of the fifth transmission stage (175), preferably the sun gear wheel (176), is connected with the first clutch (187).

28. The transmission of one or more of claims 24 to 27, **characterized in that** the planetary gear set (175) has a transmission ratio of between -0.8 and -0.2, preferably about -0.495, or of between +0.6 and +0.2, preferably about +0.495, respectively.

29. The transmission of claim 24, **characterized in that** the element is the arm (268), wherein, preferably, a first connection shaft of the fifth transmission stage (265), preferably the sun (266), is connected with the input of the first transmission stage (230).

30. The transmission of claim 29, **characterized in that** the planetary gear set (265) has a transmission ratio of between -1.3 and -4.0, preferably about -1.3153, or of between +1.7 and +4.0, preferably about +1.7, respectively.

31. The transmission of one or more of claims 1 to 30, **characterized in that** a sixth transmission stage (145; 282), acting as a power dividing set, is arranged within the main transmission (115; 215) and is configured as a three-shaft planetary gear set, wherein, preferably, a first connection shaft of the sixth transmission stage (145), preferably the sun (146), is connected with the input shaft (119), wherein, further preferably, a second connection shaft of the sixth transmission stage (145; 282), preferably the ring wheel gear (148; 281) is connected with the output of the fourth or the fifth transmission stage (160; 265) arranged behind the first transmission stage (120; 220), and wherein, finally a third connection shaft of the sixth transmission stage (145; 282), preferably the arm (149; 283), is connected with the second clutch (279; 189).

32. The transmission of claim 31, **characterized in that** the sixth transmission stage (145; 282) has a transmission ratio of between -1.5 and -3.5, preferably about -2.0526, or of between +1.5 and +4.0, respectively.

33. The transmission of claim 31 or 32, **characterized in that** the sixth transmission stage (145; 282) acts as a dividing set effecting a powered division in a load mode of operation and a direct mode of operation, respectively, such that in the synchronization between 20 % and 60 % of the drive power flow through the first transmission stage, in particular 32.2 % and 55.9 %, respectively, wherein, preferably, the sixth transmission stage (145; 282) has a transmission ratio of between -1.5 and -3.5, preferably about -2.0526, or of between +1.5 and +4.0, respectively.

**Revendications**

1. Boîte de vitesses d'automobile à rapport de transmission variable en continu, avec un arbre primaire de boîte de vitesses (11 ; 111; 211), un arbre secondaire de boîte de vitesses (13; 113 ; 213), un premier étage de transmission (20 ; 120 ; 220) à rapport de transmission réglable en continu et faisant partie d'un train principal (15 ; 105 ; 115 ; 215), et un deuxième étage de transmission (21 ; 121 ; 221) faisant office de train d'addition, l'arbre primaire de boîte de vitesses (11 ; 111 ; 211), qui tourne à une vitesse d'entraînement ($n_1$), étant relié, d'une part, à l'entrée du premier étage de transmission (20 ; 120 ; 220) et, d'autre part, à une première entrée du deuxième étage de transmission (21; 121 ; 221) par le biais d'un premier embrayage (67 ; 187 ; 277), la sortie du premier étage de transmission (20 ; 120 ; 220) étant en outre reliée, d'une part, à une deuxième entrée du deuxième étage de transmission (21 ; 121 ; 221) et, d'autre part, à l'arbre secondaire de boîte de vitesses (13 ; 113 ; 213) par le biais d'un second embrayage (69 ; 189; 279), ledit arbre secondaire constituant simultanément la sortie du deuxième étage de transmission (21 ; 121 ; 221), et le premier étage de transmission (20 ; 120 ; 220) étant conçu sous la forme d'un train à galets de friction, en particulier sous la forme d'un train épicycloïdal à galets de friction, dans lequel deux éléments à friction (40, 50 ; 140, 141; 240, 241) sont juxtaposés avec entraînement par friction dans une zone (52), l'un au moins des éléments à friction (40 ; 140 ; 240) comportant un axe de cône à friction (41 ; 143 ; 243) tournant à une vitesse de rotation ($n_3$) prédéterminée, **caractérisée en ce que** le rapport de transmission ($n_3/n_1$) entre l'arbre primaire (11 ; 111; 211) et l'axe de cône à friction (41 ; 143 ; 243) est défini de telle sorte que le ou les éléments à friction (40 ; 140 ; 240) tournent sur toute la zone de transmission à une vitesse de rotation ($n_3$) supérieure à la vitesse d'entraînement ($n_1$), l'arbre primaire (11 ; 111 ; 211) étant relié à un plateau (36 ; 138 ; 171 ; 235 ; 243) présentant un palier (38a, 39a ; 137, 172 ; 238, 246) pour l'axe de cône à friction (41 ; 143 ; 243), de telle sorte que la vitesse de rotation supérieure ($n_3$) dépend de manière proportionnelle du rapport de transmission ($i_R$) du train à galets de friction.

2. Boîte de vitesses selon la revendication 1, **caractérisée en ce que** le train principal (15 ; 115 ; 215) et le deuxième étage de transmission (21 ; 121 ; 221) sont agencés coaxialement intérieurement et entre eux par rapport à un axe principal commun.

3. Boîte de vitesses selon la revendication 1, **caractérisée en ce que** le train principal (15 ; 115 ; 215) et le deuxième étage de transmission (21 ; 121 ;

221) sont agencés chacun coaxialement intérieurement mais sur deux axes principaux parallèles entre eux.

4. Boîte de vitesses selon l'une au moins des revendications 1 à 3, **caractérisée en ce que** le premier étage de transmission (20 ; 120 ; 220) est conçu sous la forme d'un train épicycloïdal.

5. Boîte de vitesses selon l'une au moins des revendications 1 à 4, **caractérisée en ce que** le deuxième étage de transmission (21 ; 121 ; 221) consiste seulement en un train épicycloïdal à trois roues.

6. Boîte de vitesses selon l'une au moins des revendications 1 à 5, **caractérisée en ce que** le premier étage de transmission (20 ; 120 ; 220) a un rapport de transmission variable en continu sur la plage comprise entre 0,1 et 0,7, de préférence entre 0,2 et 0,4, de préférence entre 0,162 et 0,457, et de manière encore plus préférentielle entre 0,17 et 0,42.

7. Boîte de vitesses selon l'une au moins des revendications 1 à 6, **caractérisée en ce qu'**un troisième étage de transmission (25 ; 130 ; 230), qui transmet à des vitesses inférieures et fonctionne en tant que train réducteur, est agencé en amont du train à galets de friction, dans le train principal (15 ; 115 ; 215), ledit troisième étage transformant une vitesse d'entrée ($n_1$) de la boîte de vitesses (10 ; 110 ; 210) en une vitesse intermédiaire plus lente.

8. Boîte de vitesses selon la revendication 7, **caractérisée en ce que** le troisième étage de transmission (25 ; 130 ; 230) a un rapport de transmission compris entre +1,5 et +3,5, de préférence entre environ 2,07692 ou entre -1,5 et -3,5, de préférence environ -1,90 ou -2,24.

9. Boîte de vitesses selon l'une au moins des revendications 1 à 8, **caractérisée en ce que** le troisième étage de transmission (25 ; 130 ; 230) consiste en un train épicycloïdal qui définit un point de synchronisation de préférence avec un rapport de transmission correspondant d'un train intermédiaire (265).

10. Boîte de vitesses selon la revendication 9, **caractérisée en ce que** la puissance est transmise au train épicycloïdal par la roue solaire (26 : 131 ; 231).

11. Boîte de vitesses selon la revendication 9 ou 10, **caractérisée en ce que** l'axe (29 ; 134 ; 234) du train épicycloïdal est maintenu fixement.

12. Boîte de vitesses selon l'une au moins des revendications 9 à 11, **caractérisée en ce que** de la puissance est guidée de la roue à denture interne (30 ; 133 ; 233) du train épicycloïdal vers le premier étage de transmission (20 ; 120 ; 220).

13. Boîte de vitesses selon l'une au moins des revendications 1 à 12, **caractérisée en ce que**, dans le train principal (15 ; 115 ; 215), la sortie du premier étage de transmission (20 ; 120 ; 220) peut être reliée à la deuxième entrée du deuxième étage de transmission (21 ; 121 ; 221) par le biais d'un quatrième étage de transmission (45 ; 46 ; 160 ; 250) agissant comme un train d'embrayage, le quatrième étage de transmission (45, 46 ; 160) transformant en vitesses de rotation plus lentes ou plus rapides et ayant, de préférence un rapport de transmission compris entre -1,2 et -2,8, en particulier égal à environ -2,32143 ou entre +0,5 et +2,0, en particulier égal à environ +1,2434 ou +1,435.

14. Boîte de vitesses selon l'une au moins des revendications 1 à 13, **caractérisée en ce que** le premier étage de transmission (20 ; 120 ; 220) comprend un arbre (35 ; 170 ; 236), sur lequel au moins un cône à friction (40 ; 140 ; 240) est agencé de telle sorte que l'axe (41 ; 142 ; 242) du ou desdits cônes à friction est incliné par rapport à l'arbre (35 ; 170 ; 236) d'un angle égal à la moitié de l'angle d'ouverture ($\alpha$) du cône à friction (40 ; 140 ; 240) et que le cône à friction (40 ; 140 ; 240) est mobile en rotation autour de son axe (41 ; 142 ; 242), en ce qu'un anneau de friction de préférence fixe en rotation (50 ; 141 ; 241) est agencé coaxialement à l'arbre (35 ; 170 ; 236) de telle sorte qu'il appuie au niveau d'une zone, de préférence d'un point (52), avec friction, sur l'enveloppe externe (49) du cône à friction (40 ; 140 ; 240), qui est parallèle à l'axe (35 ; 170 ; 236), et de telle sorte qu'il peut être translaté dans la direction (54) de l'arbre (35 ; 170 ; 236), de façon à ce que le point (52) se déplace le long de l'enveloppe externe (49), et en ce que la vitesse de rotation du cône à friction (40 ; 140 ; 240) peut être prélevée en tant que vitesse de sortie du premier étage de transmission (20 ; 120 ; 220) par le biais d'une roue solaire (46 ; 161 ; 254).

15. Boîte de vitesses selon la revendication 14, **caractérisée en ce qu'**une roue dentée (45 ; 247) solidaire en rotation du cône à friction (40 ; 240) est orientée en direction de l'arbre secondaire (13 ; 213).

16. Boîte de vitesses selon la revendication 14, **caractérisée en ce qu'**une roue dentée (169) solidaire en rotation du cône à friction (140) est orientée en direction de l'arbre primaire (111).

17. Boîte de vitesses selon la revendication 14 ou 15, **caractérisée en ce que** l'arbre (35) portant le ou les cônes à friction (40) est conçu sous la forme d'un premier arbre creux, en ce que la roue solaire (46) est montée sur un deuxième arbre creux (47), et en ce que l'arbre primaire de boîte de vitesses (11) traverse les arbres creux (35, 47), lesquels sont alignés.

**18.** Boîte de vitesses selon la revendication 14 ou 15, **caractérisée en ce que** l'arbre (236) portant le ou les cônes à friction (240) est monté, en tant qu'arbre intermédiaire, dans le prolongement de l'arbre primaire (211) et est relié à un axe (252), et en ce qu'une roue planétaire (253) montée rotative sur l'axe (252) engrène avec la roue solaire (254).

**19.** Boîte de vitesses selon l'une au moins des revendications 14 à 18, **caractérisée en ce que** le demi angle d'ouverture ($\alpha$) est compris entre 10° et 20°, et est de préférence égal à 17°.

**20.** Boîte de vitesses selon l'une au moins des revendications 14 à 19, **caractérisée en ce que** le cône à friction (50) est doté d'un dispositif de régulation (57) asservi au couple pour réguler la force de pression appliquée au point (52).

**21.** Boîte de vitesses selon l'une au moins des revendications 1 à 20, **caractérisée en ce que** le deuxième étage de transmission (21 ; 121 ; 221) assure, en tant que train d'addition, un retour de puissance apparente en mode de fonctionnement en charge, qui passe par le premier étage de transmission (20 ; 111 ; 121), et présente encore de préférence entre 40% et 75% de la puissance d'entraînement en synchronisation, en particulier 48%.

**22.** Boîte de vitesses selon l'une au moins des revendications 5 à 21, **caractérisée en ce qu'**un premier arbre de raccordement, en particulier la première entrée du deuxième étage de transmission (21 ; 121 ; 221), est formé par l'axe (66 ; 193 ; 296) du ou des trains épicycloïdaux (60 ; 190, 195 ; 300) et est relié à la sortie constante du train principal (15 ; 115 ; 215), un deuxième arbre de raccordement, en particulier la deuxième entrée du deuxième étage de transmission (21), étant de préférence formé par la roue à denture interne (63) du train épicycloïdal (60) et étant relié à la sortie variable du train principal (15), un deuxième arbre de raccordement, en particulier la deuxième entrée du deuxième étage de transmission (121; 221), étant formé de préférence par la roue solaire (191 ; 301) du ou des trains épicycloïdaux (190, 195 ; 300) et étant relié à l'arbre secondaire de boîte de vitesses (113 ; 213).

**23.** Boîte de vitesses selon la revendication 21 ou 22, **caractérisée en ce que** le train épicycloïdal présente un rapport de transmission compris entre -0,2 et -0,65, de préférence égal à environ -0,43859 ou -0,294, ou compris entre -1,5 et -3,0, de préférence égal à -1,731, ou compris entre +1,25 et +3,0, de préférence égal à +1,32.

**24.** Boîte de vitesses selon l'une au moins des revendications 1 à 23, **caractérisée en ce qu'**un cinquième étage de transmission (175 ; 265) agissant comme un train intermédiaire est conçu sous la forme d'un train épicycloïdal et est agencé dans le train principal (115 ; 215), le cinquième étage de transmission (175 ; 265) étant de préférence entraîné côté entrée à la vitesse d'entrée du premier étage de transmission (120 ; 220), en ce que sa sortie est reliée au premier embrayage (187; 277), et en ce que de manière également préférentielle, un élément (178, 268) du train épicycloïdal est maintenu fixement et l'élément est la roue à denture interne (178).

**25.** Boîte de vitesses selon la revendication 24, **caractérisée en ce qu'**un premier arbre de raccordement du cinquième étage de transmission (175), de préférence l'axe (173), est relié directement ou par des transmissions constantes à l'arbre primaire de boîte de vitesses (111).

**26.** Boîte de vitesses selon la revendication 24, **caractérisée en ce qu'**un premier arbre de raccordement du cinquième étage de transmission (265), de préférence la roue solaire (266), est relié à la sortie du quatrième étage de transmission (250).

**27.** Boîte de vitesses selon la revendication 24 ou 25, **caractérisée en ce qu'**un deuxième arbre de raccordement du cinquième étage de transmission (175), de préférence la roue solaire (176), est relié au premier embrayage (187).

**28.** Boîte de vitesses selon l'une au moins des revendications 24 à 27, **caractérisée en ce que** le train épicycloïdal (175) présente un rapport de transmission compris entre -0,8 et -0,2, de préférence égal à environ -0,495, ou compris entre +0,6 et +0,2, de préférence égal à environ +0,495.

**29.** Boîte de vitesses selon la revendication 24, **caractérisée en ce que** l'élément est l'axe (268), un premier arbre de raccordement du cinquième étage de transmission (265), de préférence la roue solaire (266), étant de préférence relié à l'entrée du premier étage de transmission (230).

**30.** Boîte de vitesses selon la revendication 29, **caractérisée en ce que** le train épicycloïdal (265) présente un rapport de transmission compris entre -1,3 et-4,0, de préférence égal à environ -1,3153, ou compris entre +1,7 et +4,0, de préférence égal à environ +1,7.

**31.** Boîte de vitesses selon l'une au moins des revendications 1 à 30, **caractérisée en ce que**, dans le train principal (115 ; 215) est prévu un sixième étage de transmission (145, 282) agissant comme un train répartiteur de puissance, ledit sixième étage étant conçu sous la forme d'un train épicycloïdal à trois roues, un premier arbre de raccordement du sixième étage de transmission (145), en particulier la roue solaire (146), étant de préférence relié à l'arbre primaire (119), un deuxième arbre de raccordement du sixième étage de transmission (145 ; 282), de préférence la roue à denture interne (148 ; 281), étant également de préférence relié à la sortie du quatrième ou cinquième étage de transmission (160 ; 265) en aval du premier étage de transmission (120; 220), et enfin en particulier un troisième arbre de raccordement du sixième étage de transmission (145 ; 282), de préférence l'axe (149 ; 283), étant relié au deuxième embrayage (279 ; 189).

32. Boîte de vitesses selon la revendication 31, **caractérisée en ce que** le sixième étage de transmission (145 ; 282) présente un rapport de transmission compris entre -1,5 et -3,5, de préférence égal à -2,0526, ou compris entre +1,5 et +4,0.

33. Boîte de vitesses selon la revendication 31 ou 32, **caractérisée en ce que** le sixième étage de transmission (145; 282) agit en tant que train distributeur, qui effectue en mode sous charge ou en mode de fonctionnement direct une répartition de puissance, de telle sorte que dans la synchronisation, entre 20% et 60% de la puissance d'entraînement traverse le premier étage de transmission, en particulier 32,2% ou 55,9%, le sixième étage de transmission (145 ; 282) présentant de préférence un rapport de transmission compris entre -1,5 et -3,5, de préférence égal à environ -2,0526, ou compris entre +1,5 et +4,0.

Fig.1

Fig. 2

Fig. 3

Fig. 4

EP 0 916 873 B1

Fig. 5

EP 0 916 873 B1

22